# FASCICULE DE BREVET EUROPEEN

(11) **EP 2 822 815 B1**
(45) Date de publication et mention de la délivrance du brevet: **07.09.2016**
(21) Numéro de dépôt: 13712880.7
(22) Date de dépôt: 01.03.2013
(51) Int. Cl.: B60R 13/08, A62C 35/10, A62C 35/08, F01P 3/12

(54) **DISPOSITIF DE REFROIDISSEMENT RAPIDE POUR VÉHICULE AUTOMOBILE COMPRENANT UNE PIÈCE MUNIE D'UN DIFFUSEUR**
SCHNELLKÜHLUNGSVORRICHTUNG FÜR EIN KRAFTFAHRZEUG MIT EINER KOMPONENTE MIT EINEM DIFFUSOR
RAPID COOLING DEVICE FOR A MOTOR VEHICLE COMPRISING A COMPONENT FITTED WITH A DIFFUSER

(30) Priorité: 06.03.2012 FR 1252034
(43) Date de publication de la demande: 14.01.2015
(73) Titulaire: Renault S.A.S., 92100 Boulogne-Billancourt (FR)
(72) Inventeur: LAGARRIGUE, Olivier, F-78280 Guyancourt (FR); GRIMAULT, David, F-92370 Chaville (FR)
(86) Numéro de dépôt international: PCT/FR2013/050443
(87) Numéro de publication internationale: WO 2013/132179

(56) Documents cités:
- EP-A1- 2 332 616
- FR-A1- 2 942 920
- GB-A- 1 604 410
- GB-A- 2 205 037
- US-A- 3 827 502
- US-A1- 2005 167 169
- US-A1- 2006 187 000
- US-A1- 2012 047 893

## Description

La présente invention concerne un dispositif de refroidissement pour véhicule automobile comprenant une pièce de véhicule automobile ayant une première fonction technique de couverture et une seconde fonction de diffuseur ainsi qu'un véhicule équipé d'un tel dispositif.

En particulier, elle concerne une première pièce qui assure une fonction de couverture pour une pièce en regard afin d'éviter la propagation et la transmission de chaleur entre cette pièce en regard et un élément du véhicule. La pièce en regard peut être toute pièce chaude, par exemple toute pièce chaude à l'intérieur du compartiment moteur comme un collecteur d'échappement, ou bien une batterie. La première pièce, parfois appelé écran, peut être tout élément de protection ou de couverture de cette pièce chaude.

La première fonction technique de protection ou couverture peut avoir plusieurs objectifs, empêcher tout d'abord que la chaleur se diffuse et endommage des pièces situées à proximité, comme par exemple les electrovannes situées sous le collecteur d'échappement tel qu'explicité dans la demande FR2939840 ou empêcher que la chaleur se propage à des pièces intermédiaires en liaison avec l'occupant comme le tablier, ce qui pourrait occasionner un passage de chaleur entre le compartiment moteur et l'habitacle.

La pièce de véhicule assure une première fonction de couverture. Il peut arriver que la première fonction de couverture ne soit pas toujours réalisée de façon satisfaisante et dans certains cas particuliers, par exemple une situation de choc, afin de prévenir la défaillance de cette première fonction de couverture, suite par exemple à un endommagement de la couverture et dans le but d'éviter tout passage de chaleur vers l'habitacle, il a été envisagé, pour cette pièce, d'adosser à cette première fonction de couverture, une seconde fonction de refroidissement rapide. Cette seconde fonction de refroidissement rapide est réalisée au moyen d'un diffuseur intégré à la pièce.

L'objectif est, par la diffusion rapide d'un liquide, par exemple de l'eau, un composé à base aqueuse ou tout autre liquide, d'obtenir un abaissement rapide de la température de surface de la surface de la pièce chaude.

L'abaissement rapide de température réduit les risques de transmission de chaleur à l'habitacle qui pourrait être occasionné par une défaillance de l'élément de couverture. La défaillance de l'élément de couverture est ici envisagée essentiellement de manière fortuite ou accidentelle, suite à un choc violent par exemple, qui reduirait l'étanchéité de sa couverture par endommagement. L'objectif étant de pallier une défaillance de la première fonction de couverture, par une seconde fonction de refroidissement rapide, réalisée de façon additionnelle et par la même pièce.

Ce but est atteint grâce à l'invention qui propose un dispositif de refroidissement rapide pour véhicule automobile selon la revendication 1.

Ainsi, avantageusement, en cas de choc pouvant générer un endommagement de la fonction couverture de la pièce, un liquide est diffusé de manière très rapide par celle-ci en direction de la pièce chaude en regard, permettant ainsi d'abaisser la température de la pièce en regard. L'abaissement de la température de la pièce chaude permet de réduire les risques liés à la chaleur de la pièce et donc ainsi de contenir les aléas de diffusion de chaleur à destination de l'habitacle qui pourraient survenir en cas d'endommagement. L'injection et la propagation rapide de liquide permet une meilleure efficacité de la diminution de température dans le but de limiter la transmission de chaleur. Dans le cas particulier des batteries, plus cette diminution de température est réalisée tôt, c'est-à-dire juste après le choc violent, plus celle-ci est efficace. La rapidité de l'injection de liquide est obtenue par l'action de la commande externe à déclenchement pyrotechnique.

L'invention permet ainsi d'assurer la continuité dans la limitation de la propagation de la chaleur, en cas de choc notamment, grâce à une fonction de refroidissement rapide ajouté à une première fonction de couverture. Avantageusement, ces deux fonctions sont assurées par une même pièce, ce qui permet une économie notamment de pièce et un gain de masse pour le véhicule.

Dans des modes de réalisation préférés de l'invention, on peut éventuellement avoir recours, en plus des caractéristiques ci-dessus, à l'une ou à l'autre des dispositions suivantes prises seules ou en combinaison:
- les canalisations aménagées sont de forme tubulaires
- le liquide est injecté à l'intérieur de la pièce de véhicule sous l'action d'une commande externe.
- la pièce de véhicule comprend un élément fusible à l'entrée de l'ensemble de diffusion s'ouvrant pour permettre le passage du liquide en cas de déclenchement de la commande externe d'injection de liquide.
- la pièce de véhicule automobile est un écran thermique du compartiment moteur.
- la surface en regard de la pièce de véhicule est une surface de collecteur d'échappement.
- la pièce de véhicule est un couvercle de pack de batterie et la surface en regard est une surface de module de batterie.
- le liquide est à base aqueuse.
- la commande externe est à déclenchement pyrotechnique.

Enfin, l'invention concerne aussi un véhicule automobile selon la revendication 8.

D'autres caractéristiques et avantages de l'invention apparaîtront au cours de la description suivante de plusieurs de ses formes de réalisation, données à titre d'exemples non limitatifs, en regard des dessins joints. Dans le contexte de la présente demande, les termes « avant », « arrière », « gauche », « droite » s'entendent en référence au repère usuel des véhicules automobiles. Par ailleurs, sur les différentes figures, les mêmes références désignent des éléments identiques ou similaires.
Sur les dessins :
La figure 1 décrit un schéma de principe de l'invention.
La figure 2 représente une vue d'un collecteur d'échappement selon un premier mode de réalisation.
La figure 3 est un exemple d'écran thermique selon l'invention disposé sur un collecteur d'échappement, suivant un premier mode de réalisation.
La figure 4 est une vue en coupe suivant AA' de la figure 3.
La figure 5 montre une batterie suivant un second mode de réalisation.
La figure 6 montre une vue en coupe suivant BB'de la figure 5.

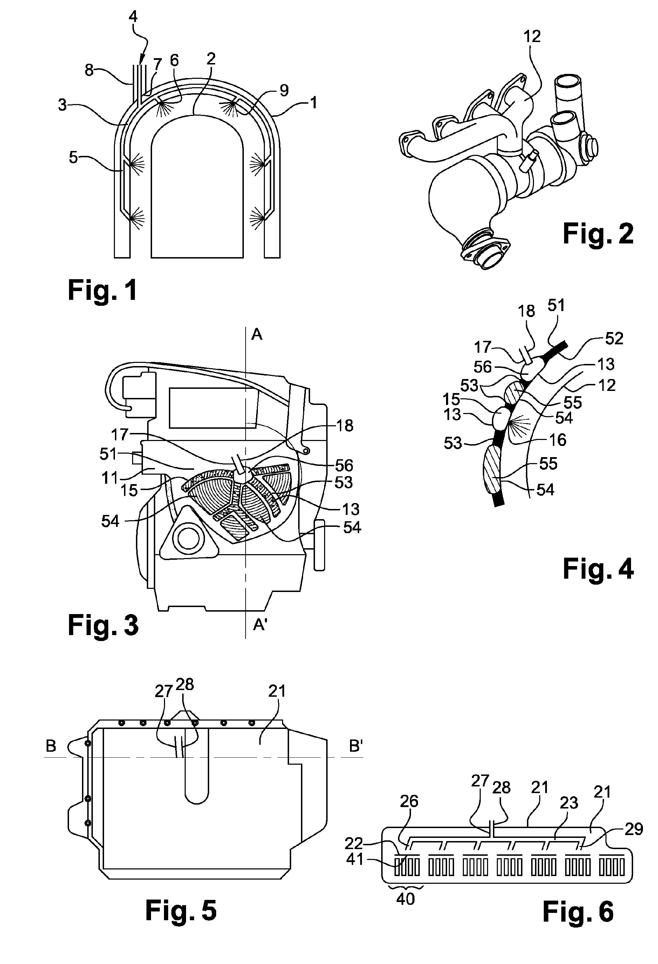

La figure 1 montre le principe du dispositif de refroidissement rapide selon l'invention. Une pièce 1 de véhicule automobile réalise une première fonction technique de couverture pour une surface proximale 2 chaude en regard. Elle comprend aussi des moyens 3 pour réaliser une fonction technique supplémentaire de diffusion rapide d'un liquide 4 injecté en direction de ladite surface proximale 2 en regard, dans le but de diminuer la température de surface de ladite surface proximale 2 en regard. Le liquide est injecté de manière très rapide à l'intérieur de la pièce de véhicule, par exemple sous l'action d'un générateur externe (non montré sur les dessins) qui peut être à déclenchement pyrotechnique. Le déclenchement est dans ce cas réalisé par le calculateur provoquant la mise en fonctionnement des autres équipements de sécurité du véhicule, par exemple les dispositifs de sécurité à sacs gonflable. Le générateur externe est muni d'un réservoir comprenant le liquide qui est acheminé par un conduit d'alimentation jusqu'à l'entrée de la pièce de véhicule, au moyen de la pression exercée par les gaz produits lors du déclenchement pyrotechnique. Une telle commande à déclenchement pyrotechnique permet d'apporter la rapidité et la pression souhaitée pour l'injection de liquide. Avantageusement, la commande à déclenchement pyrotechnique permet de s'affranchir d'un dispositif de maintien en pression du liquide.

La pièce de véhicule comprend un élément fusible 7 à l'entrée 8 de l'ensemble de diffusion 3, cet élément fusible 7 s'ouvre pour permettre l'accès du liquide 4 provenant du réservoir du générateur au circuit de diffusion 3 localisé à l'intérieur de la pièce de véhicule 1. Le conduit d'alimentation est dans ce cas de figure vide. Alternativement, le liquide peut être placé dans le conduit d'alimentation depuis le générateur et réservoir jusqu'à l'entrée 8 de l'ensemble de diffusion. Dans ce cas, le conduit d'alimentation agit comme réservoir complémentaire. L'ensemble de diffusion 3 se présente sous forme de canalisations 5 ou de galeries aménagées à l'intérieur de la pièce de couverture. Elles permettent avantageusement d'apporter le liquide au plus près de la zone à refroidir. Les tubes ou canaux débouchent sur la paroi intérieure de la pièce de couverture qui fait face à la surface chaude. Avantageusement, les extrémités débouchantes 6 sont disposées au plus près de la zone chaude à refroidir, en fonction d'informations prédéterminées de cartographie thermique de la surface chaude de la pièce en regard. Les extrémités débouchantes du circuit de canalisation sont placées au plus près des zones les plus chaudes, de façon ainsi très ciblée, dans le but d'obtenir une efficacité maximum pour l'abaissement de température. La diffusion du liquide en direction de la pièce se réalise soit par écoulement en direction de la pièce chaude ou par jet. L'extrémité 6 du canal peut consister en une buse de diffusion 9 ou en un simple trou. Avantageusement, l'orifice 6 de diffusion est situé en extrémité de canalisation et chaque bras terminal de canalisation 5 est relié à une seule extrémité de diffusion, ce qui permet d'améliorer la circulation de liquide à l'intérieur du circuit de diffusion.

Dans un premier mode de réalisation, la surface en regard est une surface de collecteur d'échappement 12 tel que représenté en figure 2 et la pièce de véhicule de couverture est un écran thermique 11 du compartiment moteur tel que représenté en figure 3. Le collecteur d'échappement 12 est l'une des pièces la plus chaude du compartiment moteur. Il est réalisé en acier ou en fonte avec une épaisseur d'environ 4 à 6 mm. En cours d'utilisation sa température peut atteindre environ 800°C. L'écran thermique assure un confinement de la chaleur émise par le collecteur, ce qui évite la propagation de chaleur vers l'habitacle. L'écran thermique est comme on le voit en figure 4 réalisé de deux enveloppes, une enveloppe externe 51 et une enveloppe interne 52 entre lesquelles est placé le circuit de diffusion 13 du liquide. L'écran thermique est réalisé en matériau relativement rigide, par exemple à partir de feuilles d'acier ou d'aluminium gaufré, pour les enveloppes extérieures. Ces feuilles sont solidarisées, par soudure notamment, dans certains espaces de soudure 53 définis afin de fixer un parcours 13 de canaux assurant la diffusion du liquide injecté. Les canalisations 15 assurant la diffusion du liquide sont sensiblement tubulaires. Tel que représenté en figure 4 et 5, les feuilles externes peuvent présenter un relief de formes extérieures galbées marquant l'emplacement des tubes de canalisation. Entre les enveloppes externes 51 et interne 52, en dehors du circuit de diffusion 13 et des espaces solidarisés par soudure pour définir le circuit de diffusion, peuvent être intégrées des surfaces d'isolation 54 réalisées par un interstice 55 rempli d'air entre les deux enveloppes. Alternativement, dans un mode de réalisation non représenté, de la matière thermiquement isolante peut être disposée à l'intérieur des deux enveloppes et le circuit de canalisation consister alors en canalisations aménagées dans la matière isolante située dans l'espace entre les deux enveloppes. De manière alternative, un circuit de canalisation constitué par des tubes préfabriqués en matière isolante est envisageable, tubes que l'on disposerait entre les deux enveloppes interne et externe en assurant une connexion en entrée et sur chaque orifice de sortie.

L'objectif du dispositif de refroidissement est d'abaisser la température d'environ 100° à 200°, pour obtenir une température pour la pièce chaude qui représente un moindre danger pour la propagation de chaleur. Cet abaissement est souhaité rapide. Dans cet objectif, on est conduit à une masse d'eau stockée dans le ou les réservoirs d'environ 400gr à 1kg en émettant l'hypothèse d'un liquide de base aqueuse. En cas de mise en fonctionnement du dispositif, le liquide est injecté par l'orifice d'entrée 18 localisé sur la face de l'enveloppe externe 51. Le liquide se repartit ensuite à l'intérieur du système de diffusion 13 pour être évacué vers les orifices de sortie placés sur l'enveloppe interne 52. A l'entrée du système de diffusion, un espace d'arrivée 56, plus large que le conduit d'entrée est prévu afin de gérer la pression d'arrivée et de mieux répartir le liquide entre les différents canaux se répartissant depuis l'espace d'arrivée. L'injection est très rapide et réalisée sur une durée d'environ 0,1 seconde. La diffusion suit l'injection de manière quasi- simultanée. L'écoulement principal peut être suivi d'un écoulement résiduel.

Dans un second mode de réalisation, représenté aux figures 5 et 6, la pièce de véhicule de couverture est un couvercle de pack batterie 21 et la surface en regard est une surface de module de batterie 22. La surface en regard peut être directement la surface de module de batterie, qui se présente dans ce cas, sous forme discontinue, car composée par la surface de cellules de batterie 40 espacées, ou une plaque froide 41 continue disposée sur les surfaces de cellules de batterie.

De même, consécutivement au déclenchement d'une commande externe, de l'eau ou autre liquide, est injecté à l'intérieur de la pièce de véhicule qui est ici un couvercle de batterie 21, comme représenté sur la figure 5. Le liquide se repartit dans le circuit de diffusion 23 jusqu'aux orifices de sortie 26 où celui-ci se diffuse en direction de la pièce en regard qui est ici une surface de module de batterie 22. Le liquide s'écoule sur la surface cible, grâce aux extrémités terminales du circuit de diffusion qui sont soit des buses de diffusion 29 ou soit un trou comme précédemment évoqué. La diffusion de liquide sur la surface chaude permet de diminuer la température de surface de la pièce chaude et permet un refroidissement de celle-ci. En compléments, divers additifs peuvent être ajoutés au liquide, en vue de maximaliser l'effet de captation thermique réalisé par le liquide.

Les exemples d'application ne sont pas limités à l'écran thermique d'un collecteur d'échappement, ou au couvercle d'un pack batterie. On pourrait ainsi imaginer de transformer le couvercle d'un module de batterie, par exemple la plaque froide 41 placée au dessus de la surface des cellules de batterie 40, réalisant une première fonction de couverture, en diffuseur selon l'invention, avec des pièces en regard qui sont des surfaces de cellules de batterie.

D'autres modes de réalisation suivant le même principe sont ainsi envisageables.

## Revendications

1. Dispositif de refroidissement rapide pour véhicule automobile comprenant une pièce (1, 11, 21) de véhicule automobile et une surface proximale (2, 12, 22) en regard, ladite pièce (1, 11, 21) réalisant une première fonction technique de couverture de ladite surface proximale (2,12,22) en regard, le dispositif étant **caractérisé en ce que** la pièce (1, 11, 21) de véhicule comprend des moyens de diffusion (3, 13, 23) pour réaliser une fonction technique de diffusion rapide d'un liquide injecté en direction de ladite surface proximale (2,12,22) en regard, dans le but de diminuer la température de surface de ladite surface proximale (2,12,22) en regard, **en ce que** le liquide est injecté sous l'action d'une commande externe à déclenchement pyrotechnique, et **en ce que** les moyens de diffusion (3, 13, 23) sont réalisés par un ensemble de diffusion (3, 13, 23) se présentant sous forme de canalisations aménagées (5,15,23) à l'intérieur de la pièce de véhicule.

2. Dispositif selon la revendication précédente **caractérisée en ce que** les canalisations aménagées sont de forme tubulaires.

3. Dispositif selon les revendications 4 à 5 **caractérisé en ce que** la pièce de véhicule comprend un élément fusible (7,17,27) à l'entrée (8,18,28) de l'ensemble de diffusion s'ouvrant pour permettre le passage du liquide (4) en cas de déclenchement de la commande externe d'injection de liquide.

4. Dispositif selon l'une quelconque des revendications précédentes **caractérisé en ce que** la pièce de véhicule automobile est un écran thermique (13) du compartiment moteur.

5. Dispositif selon la revendication précédente **caractérisé en ce que** la surface en regard est une surface de collecteur d'échappement (12).

6. Dispositif selon les revendications 1 à 6 **caractérisé en ce que** la pièce de véhicule est un couvercle de pack de batterie (21) et la surface en regard est une surface (22) de module(40) de batterie.

7. Dispositif selon l'une quelconque des revendications 1 à 9 **caractérisé en ce que** le liquide (4) est à base aqueuse.

8. Véhicule automobile comprenant un dispositif de refroidissement rapide selon l'une quelconque des revendications précédentes

## Patentansprüche

1. Schnellkühlungsvorrichtung für Kraftfahrzeug umfassend ein Teil (1, 11, 21) eines Kraftfahrzeugs und eine gegenüberliegende proximale Oberfläche (2, 12, 22), wobei das genannte Teil (1, 11, 21) eine erste technische Funktion zur Abdeckung der genannten gegenüberliegenden proximalen Oberfläche (2,12,22) realisiert, wobei die Vorrichtung **dadurch gekennzeichnet ist, dass** das Teil (1, 11, 21) eines Fahrzeugs Diffusionsmittel (3, 13, 23) zur Realisierung einer technischen Funktion der Schnelldiffusion einer in Richtung der genannten gegenüberliegenden proximalen Oberfläche (2, 12, 22) eingespritzten Flüssigkeit, mit dem Ziel, die Oberflächentemperatur der genannten gegenüberliegenden proximalen Oberfläche (2, 12, 22) zu verringern, umfasst, dass die Flüssigkeit unter der Einwirkung einer externen Steuerung mit pyrotechnischer Auslösung eingespritzt wird, und dass die Diffusionsmittel (3, 13, 23) durch eine Diffusionsbaugruppe (3, 13, 23) realisiert werden, die in Form von Leitungen (5, 15, 23), die im Inneren des Teils des Fahrzeugs angeordnet sind, ausgebildet ist.

2. Vorrichtung nach dem vorangehenden Anspruch, **dadurch gekennzeichnet, dass** die angeordneten Leitungen röhrenförmig sind.

3. Vorrichtung nach Anspruch 4 bis 5, **dadurch gekennzeichnet, dass** das Teil eines Fahrzeugs ein schmelzbares Element (7, 17, 27) am Einlass (8, 18, 28) der Diffusionsbaugruppe umfasst, welches sich öffnet, um den Durchfluss der Flüssigkeit (4) im Falle des Auslösens der externen Steuerung der Flüssigkeitseinspritzung zu gestatten.

4. Vorrichtung nach einem der vorangehenden Ansprüche, **dadurch gekennzeichnet, dass** das Teil eines Kraftfahrzeugs ein Hitzeschild (13) des Motorraums ist.

5. Vorrichtung nach dem vorangehenden Anspruch, **dadurch gekennzeichnet, dass** die gegenüberliegende Oberfläche eine Oberfläche eines Abgaskrümmers (12) ist.

6. Vorrichtung nach den Ansprüchen 1 bis 6, **dadurch gekennzeichnet, dass** das Teil eines Fahrzeugs ein Deckel eines Batteriepacks (21) ist und die gegenüberliegende Oberfläche eine Oberfläche (22) eines Batteriemoduls (40) ist.

7. Vorrichtung nach einem der Ansprüche 1 bis 9, **dadurch gekennzeichnet, dass** die Flüssigkeit (4) wasserbasiert ist.

8. Kraftfahrzeug umfassend eine Schnellkühlungsvorrichtung nach einem der vorangehenden Ansprüche.

## Claims

1. Rapid cooling device for a motor vehicle comprising a motor vehicle component (1, 11, 21) and a proximal surface (2, 12, 22) opposite it, said component (1, 11, 21) performing a first technical function of covering said opposite proximal surface (2, 12, 22), the device being **characterized in that** the vehicle component (1, 11, 21) comprises diffusion means (3, 13, 23) for performing a technical function of rapidly diffusing an injected liquid toward said proximal surface (2, 12, 22) opposite, with the purpose of reducing the surface temperature of said proximal surface (2, 12, 22) opposite, **in that** the liquid is injected under the action of a pyrotechnically triggered external command, and **in that** the diffusion means (3, 13, 23) are produced by a diffusion assembly (3, 13, 23) taking the form of passages (5, 15, 23) formed inside the vehicle component.

2. Device according to the preceding claim, **characterized in that** the passages formed are of tubular shape.

3. Device according to Claims 4 to 5, **characterized in that** the vehicle component comprises a fusible element (7, 17, 27) at the inlet (8, 18, 28) to the diffusion assembly that opens to allow the liquid (4) to pass if the external liquid-injection command is triggered.

4. Device according to any one of the preceding claims, **characterized in that** the motor vehicle component is a heat screen (13) of the engine compartment.

5. Device according to the preceding claim, **characterized in that** the surface opposite is a surface of an exhaust manifold (12).

6. Device according to Claims 1 to 6, **characterized in that** the vehicle component is a battery pack cover (21) and the surface opposite is a surface (22) of a battery module (40).

7. Device according to any one of Claims 1 to 9, **characterized in that** the liquid (4) is water-based.

8. Motor vehicle comprising a rapid cooling device according to any one of the preceding claims.
